# FASCICULE DE BREVET EUROPEEN

(11) **EP 2 616 372 B1**
(45) Date de publication et mention de la délivrance du brevet: **27.04.2016**
(21) Numéro de dépôt: 11771227.3
(22) Date de dépôt: 19.09.2011
(51) Int. Cl.: B65G 47/51, B65G 21/22

(54) **CONVOYEUR A ACCUMULATION MODULAIRE**
MODULARER AKKUMULATIONSFÖRDERER
MODULAR ACCUMULATION CONVEYOR

(30) Priorité: 17.09.2010 FR 1003715
(43) Date de publication de la demande: 24.07.2013
(73) Titulaire: Gebo Packaging Solutions France, 67116 Reichstett (FR)
(72) Inventeur: LOPEZ, Rémy, F-76930 Octeville Sur Mer (FR); PETROVIC, Zmaj, F-76930 Octeville Sur Mer (FR); WALTER, Pascal, F-76930 Octeville Sur Mer (FR)
(74) Mandataire: Eltzer, Thomas
(86) Numéro de dépôt international: PCT/FR2011/052153
(87) Numéro de publication internationale: WO 2012/035280

(56) Documents cités:
- EP-A1- 0 159 074
- EP-A1- 0 325 333
- WO-A1-00/00415
- WO-A1-2004/035432
- CA-A1- 2 364 216
- GB-A- 2 098 568
- US-A- 4 513 858

## Description

L'invention a trait au convoyage d'articles tels que des récipients. Elle concerne plus précisément un convoyeur d'articles permettant d'accumuler de manière temporaire, en fonction des besoins d'une ligne de production, des articles dans une zone de stockage tampon de capacité modulable.

Le principe du stock tampon de capacité variable est connu de longue date. Il existe deux principales architectures de convoyeurs à accumulation : l'architecture spirale et l'architecture plane.

Dans l'architecture spirale, illustrée par le brevet EP 1 161 391 (Hartness), plusieurs brins de convoyage sont superposés pour former une zone de stockage verticale à plusieurs étages. Le principal avantage théorique de cette architecture est son faible encombrement au sol au regard de la capacité de stockage permise. Cette architecture ne va cependant pas sans inconvénients. En effet, on constate en pratique des problèmes de fiabilité, dus à la longueur des chaînes d'entraînement, la tension des chaînes d'entraînement étant fonction non linéaire mais exponentielle du nombre de convolutions du convoyeur, et donc du nombre d'étages. On a donc tendance à limiter la capacité de ces convoyeurs pour limiter le risque de ruptures des chaînes, au détriment du rapport capacité/encombrement. CA 2364216 A1 décrit un convoyeur selon le préambule de la revendication 1.

Dans l'architecture plane, illustrée par le brevet US 4413 734 (Mapatent), les articles suivent un trajet comprenant également des convolutions mais demeurant dans un même plan. En pratique, le convoyeur comprend une bande transporteuse comprenant plusieurs sections rectilignes adjacentes dont les extrémités sont reliées par des sections courbes s'enroulant sur des roues de transfert. On règle la capacité d'accumulation du convoyeur en déplaçant les roues de transfert.

Les exploitants peuvent préférer l'architecture plane à l'architecture spirale en raison de sa plus grande fiabilité.

Toutefois, les convoyeurs à accumulation d'architecture plane, notamment du type de celui décrit dans le brevet Mapatent, sont réalisés sur mesure en fonction du besoin d'accumulation exprimé par l'exploitant. De sorte que si les besoins de l'exploitant évoluent à la baisse, le convoyeur se révèle finalement trop encombrant au regard de la capacité d'accumulation requise. A contrario, si les besoins d'accumulation croissent, il est nécessaire de remplacer l'ensemble du convoyeur par une nouvelle installation de capacité supérieure. Dans les deux cas les coûts d'exploitation sont grevés par l'inadéquation du convoyeur aux besoins réels de l'exploitant.

L'invention vise à apporter une solution à cette problématique.

A cet effet, l'invention propose un convoyeur d'articles à accumulation selon la revendication 1.

Cette architecture modulaire permet notamment de réaliser un convoyeur à accumulation de forme et/ou de capacité variable en fonction des besoins de l'exploitant.

Selon un mode préféré de réalisation, les modules d'accumulation sont montés sur une infrastructure commune. Selon l'invention, les bâtis des modules d'accumulation sont fixés sur l'infrastructure de manière amovible. De même, le dispositif de transfert peut être fixé aux modules de manière amovible.

En pratique, l'infrastructure comprend par exemple une pluralité de traverses sur lesquelles reposent les bâtis des modules d'accumulation, des pieds pouvant être fixés aux extrémités des traverses.

Selon un mode particulier de réalisation, les modules d'accumulation s'étendent selon des directions parallèles. En variante, les modules d'accumulation s'étendent selon des directions non parallèles.

Plus précisément, chaque module d'accumulation comprend par exemple :
- deux sections rectilignes,
- un tapis central s'étendant entre les sections rectilignes et parallèlement à ceux-ci, le tapis étant fixé par au moins une extrémité au chariot mobile,
- une motorisation en prise avec le tapis pour entraîner conjointement le tapis et le chariot dans un mouvement linéaire par rapport aux sections rectilignes et ainsi modifier la capacité d'accumulation du module.

Selon l'invention, chaque module d'accumulation comprend
- un chariot mobile muni d'une roue de transfert intercalée entre les sections rectilignes.

Selon un mode préféré de réalisation, la bande transporteuse sans fin est guidée latéralement par le tapis central.

Selon un mode particulier de réalisation, le convoyeur comprend en outre un dispositif de guidage latéral de la bande à une jonction entre une section droite et une section courbe.

Ce dispositif de guidage est par exemple magnétique, et comprend au moins un aimant situé au niveau de pièces métalliques de la bande, défilant en regard de l'aimant.

La position du dispositif de guidage est de préférence réglable selon une direction longitudinale et une direction transversale.

Le dispositif de guidage comprend par exemple une bride de fixation de l'aimant, dont un mors présente un bord contre lequel est appliquée et sur lequel glisse la chaîne.

Selon un mode particulier de réalisation, le dispositif de guidage est monté sur une platine solidaire d'un support d'une roue de transfert de la bande.

D'autres objets et avantages de l'invention apparaîtront à la lumière de la description faite ci-après en référence aux dessins annexés dans lesquels :
- la figure 1 est une vue en perspective montrant un convoyeur d'accumulation comprenant plusieurs modules d'accumulation juxtaposés ;
- la figure 2 est une vue d'un détail du convoyeur d'accumulation de la figure 1 ;
- les figures 3 à 5 sont des vues en perspectives illustrant trois étapes successives de montage du convoyeur de la figure 1 ; sur les figures 3 et 5 on a également représenté, dans des cercles centrés sur certaines parties du convoyeur, des détails de celui-ci ;
- la figure 6 est une vue d'un autre détail du convoyeur d'accumulation de la figure 1 ;
- la figure 7 est une vue en coupe montrant un détail du convoyeur de la figure 1 ;
- la figure 8 est une vue en perspective montrant un détail du convoyeur selon un exemple de réalisation dans lequel le chariot est équipé d'un dispositif de guidage magnétique ;
- la figure 9 est une vue de détail du convoyeur, selon l'encart IX de la figure 8 ;
- la figure 10 est une vue de détail de l'accumulateur en éclaté, illustrant le montage du dispositif de guidage magnétique ;
- la figure 11 est une vue de détail en coupe du convoyeur selon le plan XI de la figure 9.

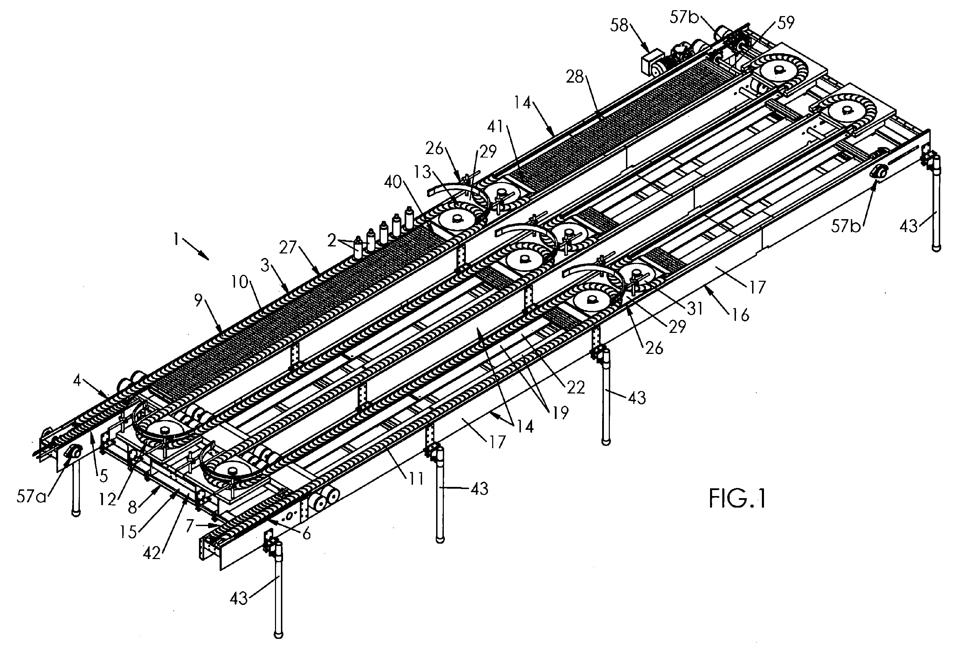

On a représenté sur la figure 1 un convoyeur **1** à accumulation, agencé pour accumuler temporairement des articles **2** (notamment des récipients, tels que des bouteilles) dans une zone **3** de stockage tampon de capacité modulable.

Ce convoyeur **1** à accumulation - ci-après dénommé plus simplement accumulateur - a pour fonction de compenser des variations potentielles de flux des articles **2** entre deux machines disposées sur une ligne de fabrication et/ou de convoyage dont il forme une dérivation locale. A cet effet, l'accumulateur 1 comprend une entrée **4,** reliée à une voie **5** d'alimentation, par laquelle les articles **2** entrent dans l'accumulateur **1,** et une sortie **6,** reliée à une voie **7** d'évacuation, par laquelle les articles **2** sortent de l'accumulateur **1.** Comme cela est visible sur la figure 1, l'entrée **4** et la sortie **6** de l'accumulateur **1** sont toutes deux situées à une même extrémité **8** (dite extrémité avant) de l'accumulateur **1.**

L'accumulateur **1** comprend une bande **9** transporteuse sans fin constituée d'une chaîne formée d'une pluralité de maillons **9.1** identiques interconnectés au moyen de deux axes, un axe A horizontal et un axe B vertical, leur permettant de pivoter les uns par rapport aux autres dans deux plans, respectivement vertical et horizontal. Les maillons **9.1** sont de préférence réalisés dans un matériau plastique à faible coefficient de friction (par exemple en Nylon® ou dans une résine ABS).

Comme cela est visible sur la figure 1, la chaîne **1** comprend une série de sections **10, 11** rectilignes parallèles, reliées à leurs extrémités par des sections **12, 13** courbes (en pratique semi-circulaires).

L'accumulateur **1** est conçu de manière modulaire. A cet effet, il comprend une pluralité (au moins deux ; trois dans l'exemple illustré sur les figures) modules **14** d'accumulation semblables, juxtaposés, montés de manière amovible sur une infrastructure **15** commune.

Chaque module **14** comporte un bâti **16** indépendant comprenant deux longerons **17** parallèles définissant une direction longitudinale. Les longerons **17** sont maintenus solidaires et à écartement constant au moyen d'une série d'entretoises **18** régulièrement espacées définissant une direction transversale.

Le bâti **16** de chaque module **14** comporte par ailleurs une paire de glissières **19** parallèles espacées s'étendant chacune le long d'un longeron **17.** Chaque glissière **19** est montée sur les entretoises **18** par l'intermédiaire d'une plaque **20** sous-jacente et de patins **21** de fixation.

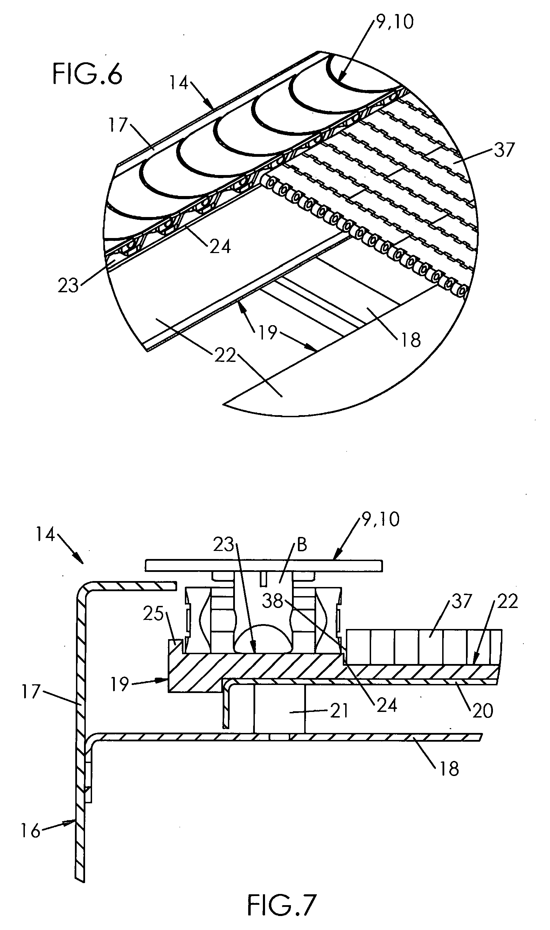

Comme illustré sur les figures 6 et 7, chaque glissière **19** présente deux sections longitudinales parallèles adjacentes, à savoir une section **22** interne, et une section **23** externe surélevée par rapport à la section **22** interne, les deux sections **22, 23** étant séparées par un épaulement **24.** Comme cela est bien visible sur la figure **7****,** la section **23** externe, destinée à former une piste accueillant une section **10, 11** rectiligne de la chaîne **9,** est bordée vers l'extérieur (c'est-à-dire à l'opposé de la section **22** interne) par une nervure **25,** qui court longitudinalement tout le long de la glissière **19** pour guider latéralement la chaîne **9** dans son mouvement de translation.

Chaque module **14** est en outre équipé d'un chariot **26** mobile monté sur les glissières **19,** et séparant le module **14** en une zone **27** utile, située du côté de l'extrémité **8** avant et où circulent effectivement les articles **2,** et une zone **28** passive, située à l'opposé, dépourvue d'articles.

Le chariot **26** comprend un plateau **29** support et une paire de roues de transfert, à savoir une roue **30** avant, située du côté de la zone **27** utile du module **14,** et une roue **31** arrière, située du côté de la zone **28** passive, toutes deux montées en libre rotation sur le plateau **29** autour d'axes verticaux. Le plateau **29** est monté coulissant sur les sections **22** internes des glissières **19 ;** il est guidé latéralement de part et d'autre par les épaulements **24.**

Le diamètre de chaque roue **30, 31** est sensiblement égal à l'écartement entre les épaulements **24** des glissières **19** en regard. Autour de chaque roue **30, 31,** le plateau **29** définit une rainure **32** en arc de cercle pour recevoir et guider la chaîne **9** dans un mouvement circulaire de demi-tour autour de la roue **30, 31.**

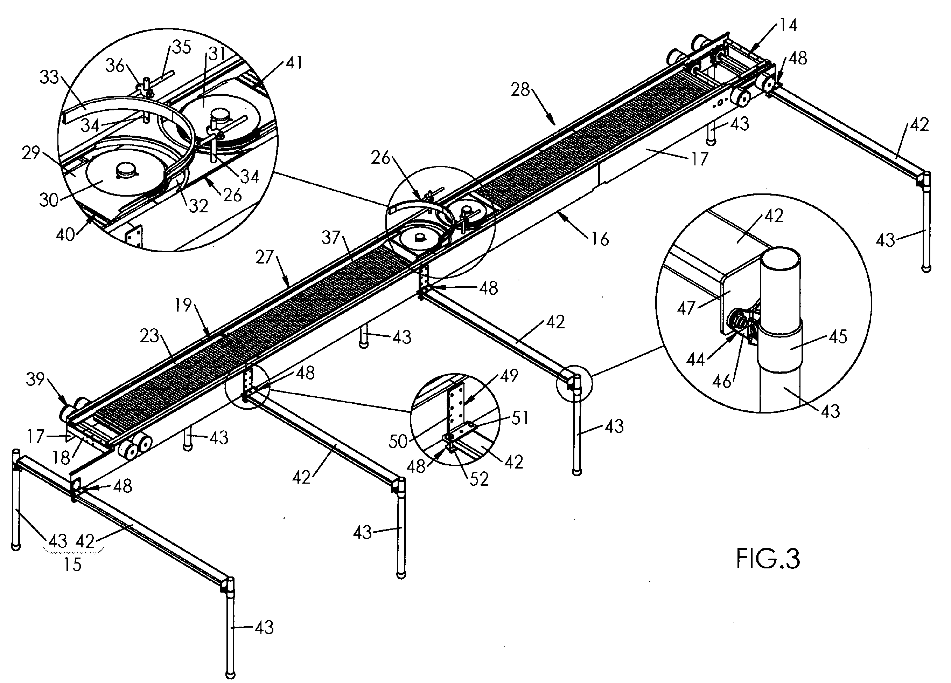

Comme cela est visible sur la figure 3, le chariot **26** comprend également un guide **33** de transfert, formé par exemple d'un profilé métallique ou plastique cintré, qui s'étend à l'aplomb de la roue **30** avant et est fixé au plateau **29** au moyen d'une paire de potences **34.** La position du guide **33** peut être ajustée longitudinalement au moyen de coulisseaux **35** fixés aux potences **34** par l'intermédiaire de noix **36** munies de vis de réglage.

Chaque module **14** comprend en outre un tapis **37** central monté sur les glissières **19.** Plus précisément, le tapis **37** repose sur les sections **22** internes des glissières **19** en étant guidé latéralement par les épaulements **24.** Comme cela est visible sur la figure 7, l'épaisseur du tapis **37** est supérieure à la hauteur de l'épaulement **24,** de sorte que chacun des bords **38** latéraux du tapis **37** s'étend verticalement au-delà de la surface supérieure de la section **23** externe qu'il jouxte, de sorte à guider latéralement la chaîne **9** dans son mouvement de translation. Ce point est expliqué plus en détail ci-après.

Le tapis **37** est constitué d'une pluralité de maillons articulés les uns par rapport aux autres autour d'axes horizontaux transversaux, et qui forment conjointement une surface sensiblement continue, comme cela est bien visible sur la figure 1, où l'on n'a représenté complètement que le tapis **37** du module **14** d'accumulation situé à gauche, les tapis **37** du module **14** central et du module **14** situé à droite n'étant que partiellement représentés pour laisser entrevoir la structure interne des modules **14,** et en particulier la configuration des glissières **19.**

Le tapis **37** circule, aux deux extrémités du module **14,** sur des poulies de renvoi dont l'une (situé en l'occurrence à une extrémité arrière du module **14)** est motorisée et l'autre (située à l'extrémité avant) suiveuse. Un système **39** de réglage de la position longitudinale de la poulie suiveuse assure la mise sous tension du tapis **37.**

Le tapis **37** est bouclé sur lui-même avec interposition du chariot **26** mobile. Plus précisément, le tapis **37** comprend une extrémité avant **40,** par laquelle il est fixé au chariot **26** du côté de la roue **30** avant, et une extrémité **41** arrière par laquelle le tapis **37** est fixé au chariot **26** du côté de la roue **31** arrière. Ainsi, le tapis **37,** solidaire du chariot **26,** entraîne celui-ci dans ses déplacements et constitue par conséquent le moyen de réglage de la capacité d'accumulation du module **14.** Un déplacement du chariot **26** vers l'avant réduit la capacité d'accumulation ; a contrario, un déplacement du chariot **26** vers l'arrière augmente la capacité d'accumulation.

Comme cela est illustré sur les figures 1 à 5, l'infrastructure **15,** sur laquelle reposent les modules **14,** comprend une série de traverses **42** (formées en l'occurrence de poutrelles métalliques à section rectangulaire) à chaque extrémité desquelles est fixé un pied **43** (formé en l'occurrence d'un tube métallique).

Comme cela est visible en détail sur la figure 3, chaque pied **43** est monté à une extrémité de la traverse par l'intermédiaire d'une fixation **44** monobloc comprenant une bague **45** réglable, dans laquelle est enserré le pied **43,** et une platine **46** boulonnée à une plaque **47** d'extrémité de la traverse **42.** Une vis de réglage permet de serrer ou desserrer la bague **45** pour régler la position verticale du pied **43 -** et donc la hauteur de l'infrastructure **15.**

Comme cela est bien visible sur la figure 3, et plus particulièrement dans le cercle de détail central, la fixation amovible des modules **14** sur l'infrastructure **15** est assurée au moyen de brides **48** comprenant chacune :
- une équerre **49** ayant une patte **50** verticale fixée à un longeron **17** et une patte **51** horizontale ;
- un étrier **52** boulonné à la patte **51** horizontale de l'équerre **49** pour enserrer une traverse **42** et y assurer ainsi la fixation amovible du module **14.**

L'accumulateur **1** comprend en outre un dispositif **53** de transfert de la chaîne **9** entre modules **14** voisins. Dans la configuration illustrée, où l'accumulateur **1** comprend trois modules **14** adjacents parallèles, deux dispositifs **53** de transfert sont prévus, intercalés chacun entre deux modules **14** adjacents.

Chaque dispositif **53** de transfert comprend un plateau **54** support et une roue **55** montée en libre rotation sur le plateau **54,** autour d'un axe vertical. Dans le plateau **54** est creusée une rainure **56** semi-circulaire autour de la roue **55,** pour recevoir et guider la chaîne **9** dans un mouvement circulaire de demi-tour autour de la roue **55.**

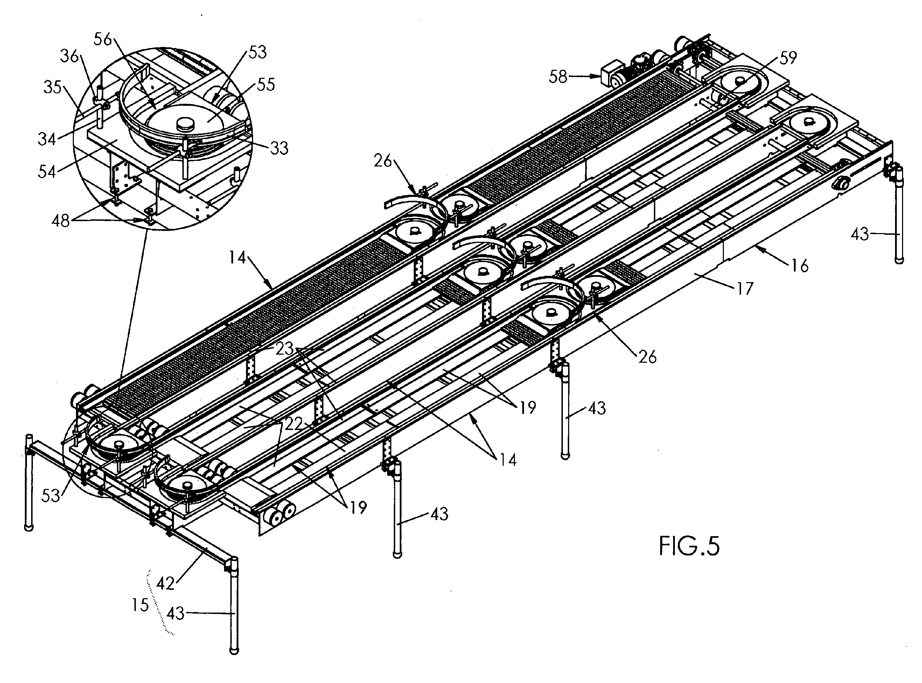

Comme cela est bien visible sur la figure 5, chaque dispositif **53** de transfert comprend un guide **33** de transfert, formé par exemple d'un profilé métallique ou plastique cintré, qui s'étend à l'aplomb de la roue **55** et est fixé au plateau **54** au moyen d'une paire de potences **34.** La position du guide **33** peut être ajustée longitudinalement au moyen de coulisseaux **35** fixés aux potences **34** par l'intermédiaire de noix **36** munies de vis de réglage.

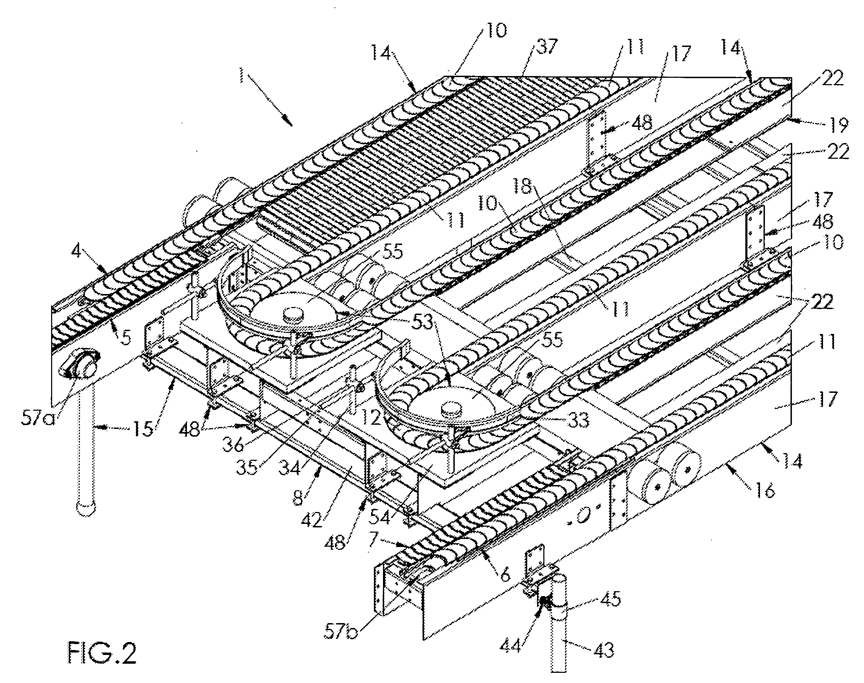

Le dispositif **53** de transfert est intercalé entre deux **14** modules adjacents, aux extrémités avant de ceux-ci. Le dispositif **53** de transfert peut être fixé, de manière amovible, soit directement sur l'infrastructure (par exemple de la même manière que les modules **14),** soit, de préférence, aux modules **14** eux-mêmes. Dans l'exemple illustré (cf. notamment les figures 2 et 5), le plateau **54** de chaque dispositif **53** de transfert est fixé sur une portion d'extrémité des longerons **17** s'étendant au-delà des glissières **19,** de manière que la rainure **56** s'étende dans le prolongement des sections **23** externes des glissières **19.**

On a représenté sur les figures 3 à 5, et sur la figure 1, différentes étapes successives de montage de l'accumulateur **1.** Une première étape, représentée sur la figure 3, consiste à monter un premier module **14** (préassemblé et donc considéré pour les besoins du montage comme un bloc indivisible) sur l'infrastructure **15.** A cet effet, on fixe les brides **48** aux traverses **42** en boulonnant les étriers **52** sur les pattes **51** horizontales des équerres **49,** préalablement fixées aux longerons **17.**

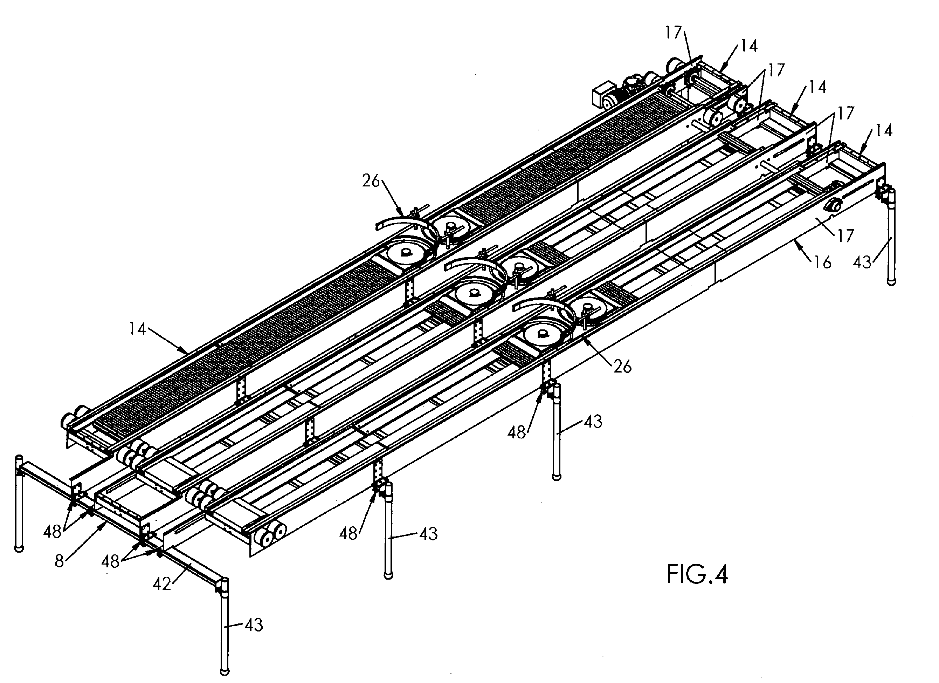

Dans une deuxième étape, illustrée sur la figure 4, on monte les autres modules **14** sur l'infrastructure **15** de la même manière que le premier module **14,** en veillant à ce que l'écartement entre deux modules **15** adjacents corresponde à une valeur prédéterminée permettant le montage, aux extrémités des modules **14,** des dispositifs **53** de transfert. Ce montage est permis et facilité par l'indépendance des bâtis **16** des modules **14.**

Dans une troisième étape, illustrée sur la figure 5, on monte chaque dispositif **53** de transfert en fixant son plateau **54** à cheval sur les longerons **17** de deux modules **14** adjacents, en veillant à ce que la rainure **56** se trouve dans le prolongement des sections **23** externes des glissières **19** qui se trouvent ainsi reliées par la rainure **56.**

Une dernière étape, illustrée sur la figure 1, consiste à monter la chaîne **9,** qui est unique pour l'ensemble de l'accumulateur **1** et, de ce fait, commune à la fois aux modules **14** d'accumulation et aux dispositifs **53** de transfert, et à raccorder l'accumulateur **1** à la voie **5** d'alimentation (raccordée au premier module **14,** à gauche sur la figure 1) et à la voie **7** d'évacuation (raccordée au dernier module **14,** à droite sur la figure 1).

Les sections rectilignes **10, 11** de la chaîne **9** forment respectivement, dans chaque module **14,** un brin aller et un brin retour circulant en sens inverse sur les pistes formées par les sections **23** externes des glissières **19.** Le brin **10** aller et le brin **11** retour d'un même module sont reliées à leurs extrémités arrière par la section courbe **13** qui circule dans la rainure **32** en s'enroulant autour de la roue **30** avant et assure le demi-tour des articles entre les brins **10, 11.** Le brin **11** retour d'un premier module **14** et le brin aller d'un second module **14** adjacent sont reliés à leurs extrémités avant par la section **12** courbe de la chaîne **9** qui circule dans la rainure **56** en s'enroulant autour de la roue **55** et assure le demi-tour de la chaîne **9** entre le brin **11** retour du premier module **14** et le brin **10** aller du second module **14.**

Dans chaque section rectiligne, la chaîne est doublement guidée latéralement :
- vers l'extérieur, par la nervure **25** ;
- vers l'intérieur, par un bord **38** du tapis **37** qui est intercalé entre les sections rectilignes **10, 11** de la chaîne **9.**

L'entraînement de la chaîne **9** est assuré au moyen d'une motorisation **57a** disposée (comme cela est visible sur la figure 1) à une extrémité avant du premier module **14,** raccordé à la voie **5** d'alimentation), tandis que trois poulies **57b** de renvoi, montées aux extrémités avant et arrière du dernier module **14** ainsi qu'à l'extrémité arrière du premier module **14,** assurent conjointement le retour en boucle de la chaîne **9.**

La capacité d'accumulation des modules **14** peut être réglée soit indépendamment, soit, comme dans l'exemple illustré, de manière conjointe au moyen d'une motorisation **58** unique entraînant en rotation un arbre **59** moteur transversal commun aux modules **14,** en prise (à enroulement, par l'intermédiaire de poulies ou de roues dentées) avec tous les tapis **37.** De la sorte, la rotation de l'arbre **59** dans un premier sens déplace conjointement les tapis **37** et les chariots **26** dans un mouvement linéaire les rapprochant de l'extrémité **8** avant de l'accumulateur **1,** ce qui réduit la longueur des sections rectilignes **10, 11** de la chaîne **9** dans les zones **27** utiles formant conjointement la zone **3** de stockage (tout en l'augmentant de manière symétrique dans les zones **28** passives) et réduit la capacité d'accumulation. A contrario, la rotation de l'arbre **59** dans le sens opposé déplace conjointement les tapis **37** et les chariots **26** dans un mouvement linéaire les éloignant de l'extrémité **8** avant de l'accumulateur **1,** ce qui augmente la longueur des sections **10,** 11 rectilignes de la chaîne **9** dans les zones **27** utiles (tout en la diminuant de manière symétrique dans les zones **28** passives) et augmente par conséquent la capacité d'accumulation.

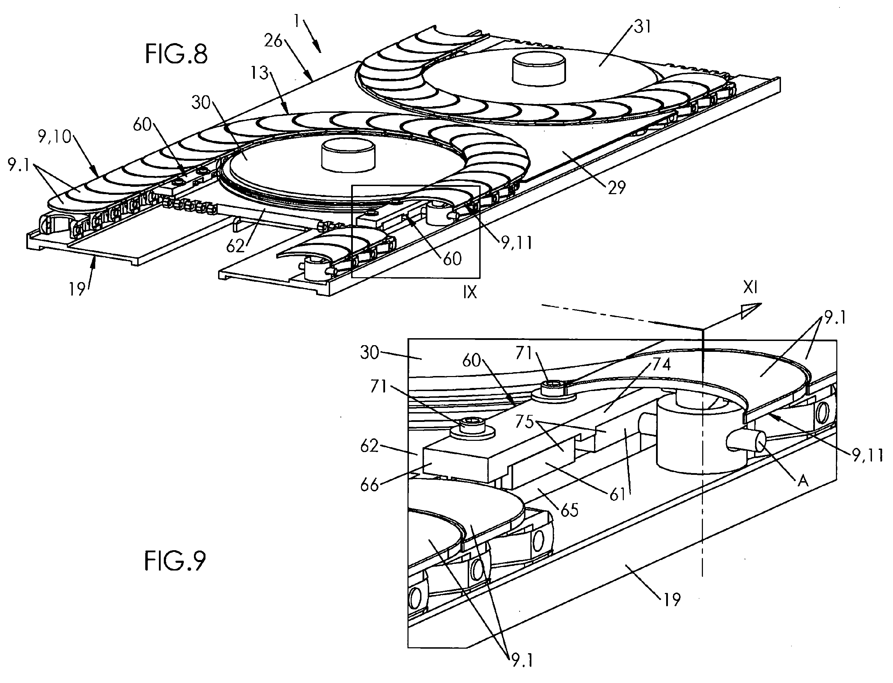

Selon un mode particulier de réalisation illustré sur les figures 8 à 11, l'accumulateur **1** est équipé d'un dispositif **60** de guidage latéral de la chaîne **9** en entrée et en sortie des sections courbes **12, 13,** à la jonction avec les sections droites **10, 11.**

En effet, le passage d'un maillon **9.1** d'une section rectiligne **10, 11** à une section courbe **12, 13 -** et réciproquement - est normalement accompagné d'un mouvement de déport latéral (c'est-à-dire perpendiculairement à la direction de déplacement) du maillon **9.1.**

Ce mouvement, localisé mais brusque, est dû à la nature polygonale des sections courbes **12, 13** de la chaîne **9,** dont l'enroulement sur les roues **30** (respectivement **31** et **55)** n'est donc pas continu mais s'effectue par à-coups, chaque maillon **9.1** entrant en contact ponctuel (ou quasi-ponctuel) avec la roue **30** (respectivement **31** et **55)** à son entrée dans la section courbe **12, 13,** le maillon **9.1** subissant un mouvement de pivotement autour de son axe **B** vertical.

On observe que ce pivotement du maillon **9.1** est accompagné d'un effort tangentiel exercé par la roue **30** (respectivement **31** et **55)** sur le maillon **9.1** lors de leur accouplement, cet effort tangentiel entraînant une variation localisée, mais brusque, de la tension dans la chaîne 9. En régime permanent (en d'autres termes à vitesse stabilisée de défilement de la chaîne **9),** ces variations de tension provoquent dans les sections **10, 11** rectilignes de la chaîne **9.1** des à-coups - c'est-à-dire une succession de cycles accélération-décélération - dans la direction longitudinale de déplacement des articles **2.** Ces à-coups peuvent déstabiliser, voire faire tomber les articles **2,** avec un risque d'arrêt d'urgence de l'accumulateur 1.

Un guidage latéral des maillons **9.1** en entrée et en sortie de sections courbes **12, 13,** à la jonction avec les sections droites **10, 11,** permet de diminuer, voire de supprimer, les à-coups.

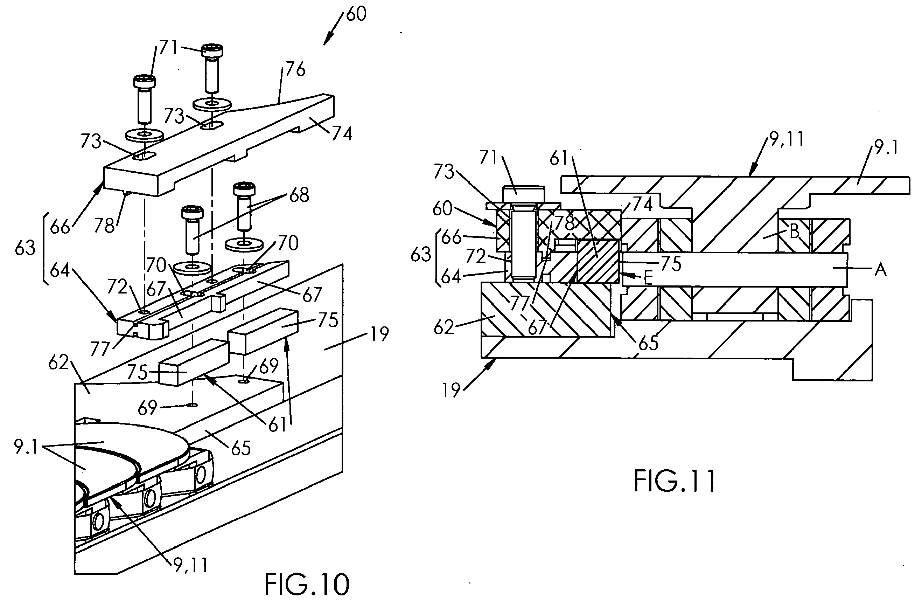

Selon un mode de réalisation préféré illustré sur les figures 8 à 11, le dispositif **60** est magnétique. Il comprend au moins un aimant **61** permanent (et de préférence, comme cela est visible sur les figures 9 et 10, une paire d'aimants **61** permanents) monté sur une platine **62** jouxtant la roue **30** (respectivement **31** et **55),** à chaque extrémité du tapis **37** central, pour exercer une attraction magnétique sur les axes **A** horizontaux des maillons **9.1.** A cet effet, les axes **A** sont réalisés dans un matériau ferromagnétique, par exemple en acier doux.

Sur les figures 8 et 9, on a rendu invisibles quelques maillons de la section 11 rectiligne de la chaîne **9** pour montrer plus clairement le dispositif **60** de guidage.

Au niveau de chaque chariot **26,** et comme illustré sur la figure 8, cette platine **62** assure la fixation du tapis **37** central au chariot **26,** et plus précisément au plateau **29** support. Au niveau de chaque dispositif **53** de transfert, la platine **62** est fixée au plateau **54,** ou est constituée par une partie de celui-ci située entre la roue **55** et l'extrémité du tapis **37.**

Selon un exemple préféré de réalisation, illustré sur la figure 10, chaque aimant **61** est de forme parallélépipédique, par exemple (comme illustré sur la figure 11) à section carrée.

Le dispositif **60** comprend une bride **63** de fixation de chaque aimant **61** sur la platine **62.** Cette bride **63** comprend un mors **64** inférieur, fixé sur la platine **62** au voisinage d'un bord **65** latéral de celle-ci, et un mors **66** supérieur fixé sur le mors **64** inférieur.

Comme cela est visible sur la figure 10, qui montre le dispositif **60** de guidage en éclaté pour illustrer son montage, le mors **64** inférieur, de préférence réalisé dans un matériau ferromagnétique (par exemple en acier doux), est pourvu d'un logement **67** pour chaque aimant **61.** Le magnétisme suffit à assurer un maintien solide de chaque **61** aimant sur le mors **64** inférieur.

La fixation du mors **64** inférieur sur la platine **62** est par exemple assurée au moyen d'une paire de boulons **68** vissés dans des trous **69** taraudés pratiqués dans la platine **62,** au travers de fenêtres **70** ménagées dans le mors **64,** avec interposition de rondelles. Comme illustré sur la figure **10****,** ces fenêtres **70** sont de préférence oblongues selon la direction transversale, de manière à permettre un débattement latéral du mors **64** par rapport à la platine **62** et par conséquent un réglage de la position du dispositif **60** selon la direction transversale.

La fixation du mors **66** supérieur sur le mors **64** inférieur est par exemple assurée au moyen d'une seconde paire de boulons **71** vissés dans des trous **72** taraudés pratiqués dans le mors **64** inférieur, au travers de fenêtres **73** ménagées dans le mors supérieur **66,** avec interposition de rondelles.

Selon un mode de réalisation, le mors **66** supérieur est réalisé dans un matériau non magnétique (notamment dans une matière plastique), de préférence à faible coefficient de frottement, par exemple en Nylon® ou équivalent. Le mors **66** supérieur présente un bord **74** externe qui, en position normale d'utilisation du dispositif **60** de guidage, dépasse du bord latéral **65** de la platine **62** et d'une face externe ou pôle **75** de chaque aimant **61,** tourné vers les maillons **9.1.**

Par ailleurs, le mors **66** supérieur présente une extrémité **76** avant biseautée en arc de cercle, d'un rayon égal ou légèrement supérieur au rayon de la roue **30** (respectivement **31, 55).**

Les fenêtres **73** sont de préférence oblongues selon la direction transversale, de manière à permettre un débattement latéral du mors **66** supérieur selon la direction longitudinale, c'est-à-dire selon la direction de déplacement de la chaîne **9** dans la section rectiligne **10, 11.**

Le parallélisme du mors **66** supérieur et du mors **64** inférieur (et donc le parallélisme du bord **74** externe et du pôle **75** de chaque aimant **61)** est assuré au moyen d'un guidage longitudinal des mors **64, 66,** par exemple par un système de rainure et languette. Une rainure **77** longitudinale est par exemple pratiquée dans le mors **64** inférieur, une languette **78** complémentaire étant prévue en saillie sur une face inférieure du mors **66** supérieur.

Par son magnétisme, le dispositif **60** de guidage latéral exerce sur l'axe **A** de chaque maillon **9.1,** qui défile en regard et au niveau de l'aimant **61,** un effort latéral de traction dirigé vers l'intérieur. Compte tenu du décalage entre le bord **74** externe du mors **66** supérieur et le pôle **75,** un entrefer **E** est maintenu entre le pôle **75** et l'extrémité de l'axe **A.** Le maillon **9.1** se trouve ainsi plaqué contre le bord **74** externe, sur lequel il peut glisser avec un minimum de frottements.

Le réglage de la position du dispositif **60** de guidage selon la direction transversale vise à assurer la tangence du bord **74** externe du mors **66** supérieur et du diamètre externe de la roue **30** (respectivement **30, 55),** de sorte à limiter (voire supprimer) les mouvements latéraux des maillons **9.1** à l'entrée dans la section **12, 13** courbe ou à la sortie de celle-ci.

Par ailleurs, le réglage de la position du mors 66 supérieur selon la direction longitudinale vise à positionner le bord **74** externe du mors **66** au plus près de la roue **30** (respectivement **31** ou **55)** pour assurer une continuité du guidage latéral des maillons **9.1** à la jonction entre la section **10, 11** rectiligne et la section **12, 13** courbe.

L'accumulateur **1** qui vient d'être décrit présente les avantages suivants.

Premièrement, l'architecture modulaire permet de fabriquer, à partir de mêmes briques de base (les modules) identiques et indépendants, des accumulateurs **1** de capacités et de dimensions diverses. Les modules **14** étant fixés sur l'infrastructure **15** de manière amovible, il est en outre possible de modifier l'accumulateur **1,** soit en supprimant un ou plusieurs modules **14** pour diminuer la capacité maximale d'accumulation, soit en ajoutant un ou plusieurs modules **14** pour augmenter la capacité maximale d'accumulation.

Deuxièmement, l'architecture modulaire facilite également le transport et le montage de l'accumulateur **1,** chaque module **14,** d'encombrement réduit et indépendant des autres, pouvant être transporté individuellement. En particulier, il est possible de fabriquer un accumulateur **1** d'une grande largeur (c'est-à-dire supérieure à la largeur nominale des remorques conventionnelles, de 2250 mm) transportable sur le lieu d'exploitation par éléments séparés dans un ou plusieurs semi-remorque(s), tandis qu'à largeur égale une fabrication conventionnelle - monobloc - suppose de recourir à un transport par convoi exceptionnel.

Troisièmement, l'architecture modulaire permet également de concevoir des accumulateurs de formes variées. Dans l'exemple illustré et décrit ci-dessus, l'accumulateur **1** est droit, les modules **14** s'étendant parallèlement les uns aux autres. Cette configuration est la plus simple et elle permet de disposer d'une infrastructure commune aux modules **14** et aux dispositifs **53** de transfert.

D'autres formes sont toutefois envisageables, dans lesquelles les modules d'accumulation s'étendent selon des directions non parallèles : par exemple en étoile ou en L, selon la configuration du lieu d'accueil et la place disponible. Ces configurations peuvent être réalisées à partir des modules inchangés, mais elles nécessitent que de légères modifications soient apportées à l'infrastructure. Ont peut ainsi prévoir une infrastructure en plusieurs éléments distincts ou raccordés entre eux, de préférence par des moyens de fixation amovible. Chaque dispositif de transfert demeure monté entre deux modules adjacents (ou successifs, du point de vue du trajet des articles) dont il assure l'interconnexion, mais son plateau support est configuré pour s'adapter à l'angle formé entre les modules. Par exemple, pour interconnecter deux modules orientés à 90°, le plateau support est pourvu d'une rainure s'étendant sur un quart de cercle.

Quatrièmement, le guidage de la chaîne **9,** dans les sections rectilignes **10, 11,** par un bord **38** latéral du tapis **37,** permet d'assurer un guidage latéral simple et efficace de la chaîne **9** sans former d'obstacle au déplacement du chariot **26.** Si le guidage extérieur (ici assuré par la nervure **25)** est de conception relativement simple, le guidage intérieur, nécessaire pour éviter tout déraillement intempestif de la chaîne **9,** pose difficulté car il doit permettre le demi-tour de la chaîne **9** autour des roues **30, 55** (et donc la déviation locale de la chaîne **9** de ses sections **10, 11** rectilignes), tout en permettant le déplacement linéaire du chariot **26** pour adapter la capacité de l'accumulateur au besoin de stockage des articles **9.** La conception proposée résout ces problèmes.

Cinquièmement, grâce au dispositif **60** de guidage latéral, la transition entre les sections droites **10, 11** et courbes **12, 13** de la chaîne **9** s'effectue sans mouvement latéral, et donc avec un minimum d'à-coups (voire aucun à-coup) dans la chaîne **9.** Il en résulte un déplacement continu et fluide des articles **2,** ce qui permet d'augmenter la cadence d'accumulation sans risque d'arrêt machine.

## Revendications

1. Convoyeur **(1)** d'articles **(2)** à accumulation, à bande **(9)** transporteuse sans fin, formé par assemblage :
- d'une pluralité de modules **(14)** d'accumulation indépendants à capacité réglable, s'étendant parallèlement ou non les uns aux autres, la capacité d'accumulation des modules **(14)** étant réglée indépendamment ou de manière conjointe, les modules **(14)** étant montés de manière amovible sur une infrastructure **(15)** commune, chaque module **(14)** étant fixé à l'infrastructure **(15)** au moyen de brides **(48),** chaque module **(14)** comprenant un bâti **(16)** indépendant définissant deux pistes **(23)** parallèles respectivement pour un brin **(10)** aller et un brin **(11)** retour de la bande **(9);**
- d'au moins un dispositif **(53)** de transfert intercalé entre deux modules **(14)** adjacents et reliant une piste **(23)** pour un brin **(11)** retour de la bande **(9)** sur un premier module **(14)** d'accumulation et une piste **(23)** pour un brin **(10)** aller de la bande **(9)** sur un deuxième module **(14),** voisin du premier module **(14) ; caractérisé en ce que** chaque module **(14)** comprend, en outre, un chariot **(26)** mobile muni d'une roue **(30)** de transfert intercalée entre les brins **(10, 11)** aller et retour ; et monté sur une paire de glissières (19) du bâti (16); et par
- une bande **(9)** transporteuse sans fin commune aux modules **(14)** d'accumulation, aux chariots **(26)** et au dispositif **(53)** de transfert.

2. Convoyeur **(1)** à accumulation selon la revendication 1, dans lequel le dispositif **(53)** de transfert est fixé aux modules **(14)** de manière amovible.

3. Convoyeur **(1)** à accumulation selon l'une des revendications 1 ou 2, dans lequel l'infrastructure **(15)** comprend une pluralité de traverses **(42)** sur lesquelles reposent les modules **(14)** d'accumulation.

4. Convoyeur **(1)** à accumulation selon la revendication 3, dans lequel l'infrastructure **(15)** comprend des pieds **(43)** fixés aux traverses **(42).**

5. Convoyeur **(1)** selon l'une des revendications 1 à 4, dans lequel chaque module **(14)** d'accumulation comprend
- deux sections **(10, 11**) rectilignes,
- un tapis **(37)** central s'étendant entre les sections **(10, 11)** rectilignes, le tapis **(37)** étant fixé par au moins une extrémité **(40, 41)** au chariot **(26)** mobile,
- une motorisation **(58)** en prise avec le tapis **(37)** pour entraîner conjointement le tapis **(37)** et le chariot **(26)** dans un mouvement linéaire par rapport aux sections **(10, 11)** rectilignes et ainsi modifier la capacité d'accumulation du module **(14).**

6. Convoyeur **(1)** selon la revendication 5, dans lequel la bande **(9)** transporteuse sans fin est guidée latéralement par le tapis **(37)** central.

7. Convoyeur selon l'une des revendications 1 à 6, qui comprend un dispositif **(60)** de guidage latéral de la bande **(9)** transporteuse sans fin à une jonction entre une section **(10, 11)** droite et une section **(12, 13)** courbe.

8. Convoyeur selon la revendication 7, dans lequel le dispositif **(60)** de guidage est magnétique, et comprend au moins un aimant **(61)** situé au niveau de pièces métalliques de la bande **(9)** transporteuse sans fin, défilant en regard de l'aimant **(61).**

9. Convoyeur selon la revendication 7 ou la revendication 8, dans lequel la position du dispositif **(60)** de guidage est réglable selon une direction longitudinale et une direction transversale.

10. Convoyeur selon l'une des revendications 8 ou 9, dans lequel le dispositif **(60)** de guidage comprend une bride **(63)** de fixation de l'aimant **(61),** dont un mors **(66)** présente un bord **(74)** contre lequel est appliquée et sur lequel glisse la bande**(9)** constituée d'une chaîne.

11. Convoyeur selon l'une des revendications 7 à 10, dans lequel le dispositif **(60)** de guidage est monté sur une platine **(62)** solidaire d'un support **(29, 54)** d'une roue **(30, 31, 55)** de transfert de la bande **(9).**

## Patentansprüche

1. Akkumulationsförderer (1) von Artikeln (2) mit endlosem Förderband (9), der ausgebildet ist durch Zusammenfügen:
- mehrerer unabhängiger Akkumulationsmodule (14) mit regulierbarer Kapazität, die sich zueinander parallel oder nicht erstrecken, wobei die Akkumulationskapazität der Module (14) unabhängig oder gemeinsam reguliert wird, wobei die Module (14) abnehmbar auf einer gemeinsamen Infrastruktur (15) installiert sind, wobei jedes Modul (14) an der Infrastruktur (15) mittels Flanschen (48) befestigt ist, wobei jedes Modul (14) ein unabhängiges Gestell (16) umfasst, das zwei parallele Bahnen (23) jeweils für einen Hinlaufstrang (10) und einen Rücklaufstrang (11) des Bands (9) umfasst,
- mindestens einer Transfervorrichtung (53), die zwischen zwei benachbarten Modulen (14) eingefügt ist und eine Bahn (23) für einen Rücklaufstrang (11) des Bands (9) auf einem ersten Akkumulationsmodul (14) und eine Bahn (23) für einen Hinlaufstrang (10) des Bands (9) auf einem zweiten Modul (14) verbindet, das mit dem ersten Modul (14) benachbart ist, **dadurch gekennzeichnet, dass** jedes Modul (14) außerdem einen beweglichen Wagen (26) umfasst, der mit einem Transferrad (30) versehen ist, das zwischen den Hinlauf- und den Rücklaufstrang (10, 11) eingefügt und auf einem Paar Gleitschienen (19) des Gestells (16) installiert ist; und durch
- ein endloses Förderband (9), das die Akkumulationsmodule (14) gemeinsam haben, mit den Wagen (26) und der Transfervorrichtung (53).

2. Akkumulationsförderer (1) nach Anspruch 1, wobei die Transfervorrichtung (53) an den Modulen (14) abnehmbar befestigt ist.

3. Akkumulationsförderer (1) nach einem der Ansprüche 1 oder 2, wobei die Infrastruktur (15) mehrere Querträger (42) umfasst, auf welchen die Akkumulationsmodule (14) ruhen.

4. Akkumulationsförderer (1) nach Anspruch 3, wobei die Infrastruktur (15) Füße (43) umfasst, die an den Querträgern (42) befestigt sind.

5. Förderer (1) nach einem der Ansprüche 1 bis 4, wobei jedes Akkumulationsmodul (14) Folgendes umfasst:
- zwei geradlinige Abschnitte (10, 11),
- eine zentrale Matte (37), die sich zwischen den geradlinigen Abschnitten (10, 11) erstreckt, wobei die Matte (37) an mindestens einem Ende (40, 41) an dem beweglichen Wagen (26) befestigt ist,
- einen Antrieb (58), der in die Matte (37) eingreift, um die Matte (37) und den Wagen (26) gemeinsam in einer linearen Bewegung in Bezug auf die geradlinigen Abschnitte (10, 11) anzutreiben und daher die Akkumulationskapazität des Moduls (14) zu ändern.

6. Förderer (1) nach Anspruch 5, wobei das endlose Förderband (9) seitlich von der zentralen Matte (37) geführt ist.

7. Förderer nach einem der Ansprüche 1 bis 6, der eine seitliche Führungsvorrichtung (60) des endlosen Förderbands (9) an einem Stoß zwischen einem geraden Abschnitt (10, 11) und einem gekrümmten Abschnitt (12, 13) umfasst.

8. Förderer nach Anspruch 7, wobei die Führungsvorrichtung (60) magnetisch ist und mindestens einen Magnet (61) umfasst, der im Bereich von metallischen Teilen des endlosen Förderbands (9), die gegenüber dem Magnet (61) vorbeilaufen, liegt.

9. Förderer nach Anspruch 7 oder Anspruch 8, wobei die Position der Führungsvorrichtung (60) gemäß einer Längsrichtung und einer Querrichtung regulierbar ist.

10. Förderer nach einem der Ansprüche 8 oder 9, wobei die Führungsvorrichtung (60) einen Befestigungsflansch (63) des Magnets (61) umfasst, wovon eine Backe (66) einen Rand (74) aufweist, gegen den das Band (9), das aus einer Kette besteht, angelegt ist und gleitet.

11. Förderer nach einem der Ansprüche 7 bis 10, wobei die Führungsvorrichtung (60) auf einer Platte (62) installiert ist, die fest mit einem Träger (29, 54) eines Transferrads (30, 31, 55) des Bands (9) verbunden ist.

## Claims

1. Accumulation conveyor (1) of articles (2) by endless conveyor band (9), formed by assembling:
- a plurality of independent adjustable-capacity accumulation modules (14), extending along parallel or non-parallel directions, the accumulation capacity being adjustable, at least one of independently or jointly, with the other accumulation modules (14), the accumulation modules (14) being removably mounted on a common infrastructure (15), each module (14) being attached to the infrastructure (15) by means of flanges (48), each module (14) comprising an independent frame (16) defining two parallel tracks (23) respectively for an advance strand (10) and a return strand (11) of the band (9);
- at least one transfer device (53) inserted between two adjacent modules (14) and connecting a track (23) for a return strand (11) of the band (9) to a first accumulation module (14) and a track (23) for an advance strand (10) of the band (9) to a second module (14), adjacent to the first;
**characterized in that**
- each module (14) is further equiped with a movable carriage (26) provided with a transfer wheel (30) that is interposed between the advance and return strand (10, 11) and mounted on a pair of slide rails (19) of the frame (16) and by
- an endless conveyor band (9) common to the accumulation modules (14) and to the transfer device (53).

2. Accumulation conveyor (1) according to claim 1, wherein the transfer device (53) is removably attached to the modules (14).

3. Accumulation conveyor (1) according to either claim 1 or claim 2, wherein the infrastructure (15) comprises a plurality of cross members (42) on which the accumulation modules (14) rest.

4. Accumulation conveyor (1) according to claim 5, wherein the infrastructure (15) comprises legs (43) attached to the cross members (42).

5. Conveyor (1) according to claim 1, wherein each accumulation module (14) comprises:
- two rectilinear sections (10, 11),
- a central belt (37) extending between the rectilinear sections (10, 11), the belt (37) being attached by at least one end (40, 41) to the movable carriage (26),
- a motor (58) engaged with the belt (37) to jointly drive the belt (37) and the carriage (26) in a linear movement with respect to the rectilinear sections (10, 11), and thus to modify the accumulation capacity of the module (14).

6. Conveyor (1) according to claim 9, wherein the endless conveyor band (9) is guided laterally by the central belt (37).

7. Conveyor according to any of claims 1 to 6, which comprises a lateral guide device (60) of the band (9) at a junction between a straight section (10, 11) and a curved section (12, 13).

8. Conveyor according to claim 7, wherein the guide device (60) is magnetic, and comprises at least one magnet (61) situated at the level of metal parts (A) of the band (9), passing in front of the magnet (61).

9. Conveyor according to claim 7 or 8, wherein the position of the guide device (60) is adjustable in a longitudinal direction and a transverse direction.

10. Conveyor according to any of claim 8 or 9, wherein the guide device (60) comprises a magnet (61) mounting clamp (63), one jaw (66) of which has an edge (74) against which the band (9) as a chain is applied and on which it slides.

11. Conveyor according to any of claims 7 to 10, wherein the guide device (60) is mounted on a plate (62) integral with a support (29, 54) of a transfer wheel (30, 31, 55) of the band (9).
